# EUROPÄISCHE PATENTSCHRIFT

(11) **EP 3 455 097 B1**
(45) Veröffentlichungstag und Bekanntmachung des Hinweises auf die Patenterteilung: **06.05.2020**
(21) Anmeldenummer: 17713624.9
(22) Anmeldetag: 24.03.2017
(51) Int. Cl.: B60K 28/06, G01C 21/26, B60R 16/037

(54) **VERFAHREN ZUR STEUERUNG VON SPRACHGESTEUERTEN BEDIENSCHNITTSTELLEN IN KRAFTFAHRZEUGEN UND VORRICHTUNG ZUR DURCHFÜHRUNG DES VERFAHRENS**
METHOD FOR CONTROLLING VOICE-CONTROLLED OPERATING INTERFACES IN MOTOR VEHICLES AND DEVICE FOR PERFORMING THE METHOD
PROCÉDÉ DE COMMANDE D'INTERFACES UTILISATEUR À COMMANDE VOCALE DANS DES VÉHICULES À MOTEUR ET DISPOSITIF POUR METTRE LEDIT PROCÉDÉ EN OEUVRE

(30) Priorität: 10.05.2016 DE 102016207975
(43) Veröffentlichungstag der Anmeldung: 20.03.2019
(73) Patentinhaber: Robert Bosch GmbH, 70442 Stuttgart (DE)
(72) Erfinder: SPIELER, David, 85053 Ingolstadt (DE)
(86) Internationale Anmeldenummer: PCT/EP2017/057055
(87) Internationale Veröffentlichungsnummer: WO 2017/194241

(56) Entgegenhaltungen:
- DE-A1- 10 255 436
- JP-A- 2009 266 100
- US-A1- 2010 057 464

## Beschreibung

Die Erfindung betrifft ein Verfahren zur Steuerung von sprachgesteuerten Bedienschnittstellen in Kraftfahrzeugen und eine Vorrichtung zur Durchführung des Verfahrens.

Sprachgesteuerte Bedienschnittstellen werden beispielsweise zur Steuerung von Navigationssystemen in Kraftfahrzeugen eingesetzt. Jedoch können über sprachgesteuerte Bedienschnittstellen auch weitere Funktionen des Kraftfahrzeuges gesteuert werden.

### Stand der Technik

Aus der JP 2009-266100 A ist eine Vorrichtung bekannt, welche den aktuellen mentalen Zustand des Fahrers, zum Beispiel dessen Müdigkeit, anhand von Spurpositionsdaten erkennt.

Die US 5,862,511 A offenbart ein Fahrzeugnavigationssystem, welches unter Verwendung von Geschwindigkeits- und Fahrtrichtungsdaten eine zukünftige Fahrzeugposition aus der aktuellen Position schätzt.

Die DE 102 55 436 A1 offenbart ein Fahrerassistenzsystem für ein Kraftfahrzeug, mit Ausgabemitteln zur Ausgabe von Informationen an einen Fahrzeugführer des Kraftfahrzeugs und Bedienmitteln zur Bedienung des Fahrerassistenzsystems durch den Fahrzeugführer und Steuermitteln zur Steuerung der Informationsausgabe und der Bedienung, wobei Mittel zur Bestimmung eines Belastungszustandes des Fahrzeugführers vorgesehen sind, und dass die Steuermittel zur Steuerung der Informationausgabe und der Bedienung in Abhängigkeit des Belastungszustandes des Fahrzeugführers ausgebildet sind.

Ein Problem bekannter sprachgesteuerter Bedienschnittstellen ist die mentale Belastung des Benutzers und die damit einhergehende Ablenkung vom Hauptgeschehen, wie beispielsweise dem Straßenverkehr. Zu einer Gefährdung des Benutzers und anderer Verkehrsteilnehmer kommt es oftmals, wenn eine Interaktion mit der sprachgesteuerten Bedienschnittstelle gleichzeitig zu kritischen Fahrsituationen, wie zum Beispiel dem Abbiegen an Kreuzungen oder Überholmanövern, erfolgen soll.

Die bekannten Systeme versuchen jedoch nicht die Probleme sprachgesteuerter Bedienschnittstellen vorherzusehen oder diese aktiv und präventiv zu verhindern. Insbesondere werden die verwendeten Daten nicht mit einer möglichen mentalen Belastung des Benutzers in Verbindung gebracht.

### Offenbarung der Erfindung

Der vorliegenden Erfindung liegt die Aufgabe zugrunde, ein Verfahren und eine Vorrichtung zur Reduktion der Ablenkung eines Benutzers durch sprachgesteuerte Bedienschnittstellen im Straßenverkehr bereitzustellen.

Die der Erfindung zugrunde liegende Aufgabe wird dabei durch Bereitstellung eines Verfahrens zur Steuerung von sprachgesteuerten Bedienschnittstellen in Kraftfahrzeugen gelöst, umfassend die Schritte:
a) Bestimmen einer zu erwartenden Position eines Kraftfahrzeuges innerhalb eines vorbestimmten zukünftigen Zeitintervalls,
b) Ermitteln von statischen und/oder dynamischen Belastungsquellen an der zu erwartenden Position,
c) Zuweisen mindestens eines Belastungswertes an mindestens eine der ermittelten statischen und/oder dynamischen Belastungsquellen,
d) Ermitteln eines akkumulierten Belastungswertes aus dem mindestens einen Belastungswert und/oder Übernehmen mindestens eines Belastungswertes als akkumulierten Belastungswert,
e) Erkennen einer mentalen Belastungssituation eines Benutzers einer sprachgesteuerten Bedienschnittstelle in dem vorbestimmten zukünftigen Zeitintervall, wobei die mentale Belastungssituation erkannt wird, wenn der akkumulierte Belastungswert an der zu erwartenden Position und/oder in dem vorbestimmten zukünftigen Zeitintervall einen vorbestimmten Schwellenwert überschreitet, und
f) Anpassen einer Interaktion zwischen einer sprachgesteuerten Bedienschnittstelle und einem Benutzer, wenn eine Belastungssituation erkannt wurde, wobei die Anpassung eine zeitliche Verschiebung und/oder eine Aussetzung und/oder ein Abbruch einer Spracheingabe und/oder einer Sprachausgabe und/oder eines Gesamtdialogs zwischen sprachgesteuerter Bedienschnittstelle und Benutzer ist.

Durch das Anpassen einer Interaktion zwischen einer sprachgesteuerten Bedienschnittstelle und einem Benutzer wird vorteilhafterweise ermöglicht, dass der Benutzer in stressigen Situationen im Straßenverkehr nicht weiterer mentaler Belastung ausgesetzt wird, wie bei üblichen sprachgesteuerten Bedienschnittstellen, welche sich nicht an die mentale Belastung des Benutzers anpassen.

Dabei ist es von besonderem Vorteil, dass eine mentale Belastungssituation eines Benutzers einer sprachgesteuerten Bedienschnittstelle in dem vorbestimmten zukünftigen Zeitintervall erkannt wird, wenn der akkumulierte Belastungswert an der zu erwartenden Position und/oder in dem vorbestimmten zukünftigen Zeitintervall einen vorbestimmten Schwellenwert überschreitet. Eine Anpassung einer Interaktion zwischen einer sprachgesteuerten Bedienschnittstelle und einem Benutzer kann daher schon erfolgen beziehungsweise vorbereitet werden, bevor eine mentale Belastungssituation eintritt. Hieraus ergibt sich der Vorteil, dass ein ausreichender zeitlicher Abstand zwischen der mentalen Belastungssituation und der Interaktion zwischen der sprachgesteuerten Bedienschnittstelle und dem Benutzer vorliegt, sodass die Belastung des Benutzers in der Belastungssituation besonders stark reduziert wird.

Weiter ist vorteilhaft, dass die Anpassung einer Interaktion in einer zeitlichen Verschiebung und/oder einer Aussetzung und/oder einem Abbruch einer Spracheingabe und/oder einer Sprachausgabe und/oder eines Gesamtdialoges zwischen sprachgesteuerter Bedienschnittstelle und Benutzer ist.

Mit anderen Worten findet eine Anpassung des Timings von Spracheingabe und/oder Sprachausgabe statt, wodurch die Ablenkung des Benutzers reduziert werden kann. Der Benutzer kann die sprachgesteuerte Bedienschnittstelle weiter benutzen, wenn sich die Situation, insbesondere die Belastungssituation vereinfacht hat.

Bevorzugt kann vorgesehen sein, dass in einem Verfahrensschritt eine aktuelle mentale Belastungssituation eines Benutzers erkannt wird.

Das Erkennen einer aktuellen mentalen Belastungssituation ist von Vorteil bei sich schnell ändernden Verkehrssituationen, in welchen die Belastungssituation nicht im Voraus im Rahmen des Verfahrens erkannt werden kann.

Bevorzugt ist vorgesehen, dass eine statische Belastungsquelle eine Kreuzung und/oder eine Abbiegespur und/oder ein Ort mit hoher Unfallrate und/oder ein Ort mit Geschwindigkeitsreduzierungen und/oder ein Ort mit Gefahrenschildern ist.

Ferner kann bevorzugt vorgesehen sein, dass eine dynamische Belastungsquelle ein Stau und/oder Bauarbeiten und/oder Wetterbedingungen ist oder sind.

Besonders bevorzugt wird das Verfahren durchgeführt, während die sprachgesteuerte Bedienschnittstelle aktiv ist. Weiter bevorzugt ist vorgesehen, dass auch die aktuelle Verkehrssituation und die damit einhergehenden Möglichen mentalen Belastungen erfasst werden.

Bevorzugt ist ferner vorgesehen, dass die minimalen Voraussetzungen zur Durchführung des Verfahrens Messdaten sind über:
a) die aktuelle Position, sowie
b) die aktuelle Geschwindigkeit eines Kraftfahrzeuges.

Die aktuelle Position und/oder die aktuelle Geschwindigkeit können über eine Fahrzeugdatenschnittstelle erfasst werden. Ferner wird bevorzugt ein Datenmodell eines Straßennetzes, insbesondere eine Straßenkarte, über eine Navigationskomponente beziehungsweise ein Navigationsmodul, wie beispielsweise ein Navigationssystem, bereitgestellt. Dabei kann die aktuelle Position und/oder die aktuelle Geschwindigkeit alternativ oder zusätzlich auch durch das Navigationsmodul bestimmt werden. Die benötigten Informationen sind im Falle eines Navigationsmoduls beziehungsweise eines Navigationssystems üblicherweise vorhanden. Im Gegensatz zum Stand der Technik werden diese Informationen genutzt, um die aktuelle und zukünftige mentale Belastung des Benutzers in Bezug auf die Verkehrssituation abzuschätzen beziehungsweise vorauszusehen.

Bevorzugt ist vorgesehen, dass der mindestens eine Belastungswert unter Hinzuziehung von Benutzereingaben angepasst wird.

Vorteilhafterweise stellt das Verfahren somit einen Lernbetrieb beziehungsweise eine Anlern- oder eine Optimierungsphase bereit.

Sicherlich reagieren unterschiedliche Benutzer auch unterschiedlich auf Stress und die mentalen Belastungen im Straßenverkehr. Daher ist es vorteilhaft, wenn sich das System an den jeweiligen Nutzer anpasst. Diese Anpassung kann durch Optimierung der Belastungswerte von verschiedenen Belastungsquellen erfolgen. Dafür kann der Benutzer insbesondere über die sprachgesteuerte Bedienschnittstelle zu jedem Zeitpunkt, gegebenenfalls mit Ausnahme eines Zeitpunkts, in welchem die Spracheingabe verschoben wurde, Rückmeldung beziehungsweise Feedback darüber geben, wie er die aktuelle oder vorhergehende Belastungssituation erlebt hat.

Je nachdem, ob es sich dabei um ein positives konkretes Feedback (beispielsweise die gesprochene Rückmeldung: "diese Kreuzung war nicht schlimm") oder ein negatives konkretes Feedback (beispielsweise die gesprochene Rückmeldung: "Dieser Spurwechsel war sehr schwierig") handelt, wird der Belastungswert für die Belastungssituation, auf die sich die Rückmeldung bezieht, gesenkt oder erhöht.

Weiter bevorzugt ist vorgesehen, dass mindestens einer Belastungsquelle ein allgemeiner typspezifischer Belastungswert und/oder ein persönlicher typspezifischer Belastungswert und/oder ein allgemeiner konkreter Belastungswert und/oder ein persönlicher konkreter Belastungswert zugewiesen wird.

Konkrete Belastungswerte beziehen sich auf ein spezielles Ereignis, wie zum Beispiel eine bestimmte Kreuzung. Daneben können konkrete Belastungswerte lokalen Orten wie beispielsweise Krankenhäusern, Schulen, Kindergärten oder Altenheimen zugewiesen werden. Typspezifische Belastungen dagegen auf ganze Kategorien, wie zum Beispiel Kreuzungen im Allgemeinen. Allgemeine Belastungswerte sind Werte, welche dem Verfahren vorgegeben werden beziehungsweise einer Vorrichtung, welche das Verfahren ausführt, beiliegen. Allgemeine Belastungswerte können während der Durchführung des Verfahrens oder der Benutzung der Vorrichtung dynamisch nachgeladen werden. Ferner sind allgemeine Belastungswerte nicht spezifisch einem Benutzer zugeordnet, sondern können zum Beispiel durch eine Mitteilung über Belastungswerte mehrerer Benutzer errechnet werden. Persönliche Werte sind direkt dem Benutzer zugeordnet, welcher unmittelbar Einfluss auf diesen Wert haben kann. Alle diese Daten können vorteilhafterweise in einer Datenbank abgespeichert werden. Weitere Ereignisse, welchen ein allgemeiner typspezifischer Belastungswert und/oder ein persönlicher typspezifischer Belastungswert und/oder ein allgemeiner konkreter Belastungswert und/oder ein persönlicher konkreter Belastungswert zugewiesen werden kann, sind das lokale oder allgemeine Verkehrsaufkommen, beispielsweise in der sogenannten "Rushhour" beziehungsweise dem Feierabendverkehr, oder der Personenverkehr und der öffentliche Personennahverkehr. Insbesondere im Hinblick auf lokale Orten wie beispielsweise Krankenhäuser, Schulen, Kindergärten oder Altenheime kann der Personenverkehr zu konkreten, typspezifischen, allgemeinen oder persönlichen Belastungen führen, so dass entsprechend Belastungswerte zugeordnet werden können.

Weiter bevorzugt ist vorgesehen, dass zur Bestimmung der zu erwartenden Position Routeninformationen eines Navigationsmoduls berücksichtigt werden.

Durch die Verwendung von Routeninformationen, insbesondere wenn ein Kraftfahrzeugführer als Benutzer der sprachgesteuerten Bedienschnittstelle den Routeninformationen folgt, kann die Genauigkeit der Bestimmung einer zu erwartenden Position des Kraftfahrzeuges innerhalb eines vorbestimmten zukünftigen Zeitintervalls präzisiert werden.

In einer weiteren bevorzugten Ausführungsform ist vorgesehen, dass Belastungsquellen und/oder Belastungswerte aktualisiert werden, wobei die Aktualisierung durch Hinzuziehung einer externen Datenbank, insbesondere einer externen Datenbank eines Cloud-Systems und/oder eines Server-Systems, und/oder eines Traffic-Message-Channels (TMC) erfolgt.

Ein Traffic-Message-Channel ist ein zusätzlicher Informationskanal neben dem lokalem Radio-Programm (TMC-Standard ISO 14819).

Ferner kann bevorzugt vorgesehen sein, dass Belastungswerte unter Berücksichtigung von Gesundheitswerten beziehungsweise Gesundheitsdaten eines Benutzers einer sprachgesteuerten Bedienschnittstelle angepasst werden.

Beispielsweise kann eine Anpassung der Belastungswerte unter Berücksichtigung des Alters des Kraftfahrzeugführers durchgeführt werden. Da ältere Verkehrsteilnehmer häufig Situationen als belastender beziehungsweise mit einem höheren Stresslevel als jüngere Verkehrsteilnehmer erfahren, können bei Berücksichtigung des Alters des Kraftfahrzeugführers die allgemeinen, persönlichen, konkreten und/oder typspezifischen Belastungswerte erhöht werden, sodass Belastungssituationen für einen älteren Verkehrsteilnehmer häufiger erkannt werden, als für einen jüngeren Kraftfahrzeugführer. Ältere Kraftfahrzeugführer werden dadurch weiter entlastet.

Eine weitere Lösung der der Erfindung zugrunde liegenden Aufgabe besteht in der Bereitstellung einer Vorrichtung geeignet zur Durchführung des vorbeschriebenen Verfahrens, umfassend eine sprachgesteuerte Bedienschnittstelle, ein Navigationsmodul, eine Datenbank, ein Fahrzeugdatenmodul, und ein Belastungsbewertungsmodul, wobei das Fahrzeugdatenmodul ausgebildet ist, wenigstens die Position und/oder die Geschwindigkeit eines Kraftfahrzeuges zu ermitteln, wobei das Navigationsmodul ausgebildet ist, ein Datenmodell eines Straßennetzes in einer Umgebung einer Position eines Kraftfahrzeuges bereitzustellen, wobei das Belastungsbewertungsmodul ausgebildet ist, für ein zukünftiges vorbestimmtes Zeitintervall eine zu erwartende Position eines Kraftfahrzeuges unter Verwendung mindestens der Position und der Geschwindigkeit des Kraftfahrzeuges und des Datenmodells des Straßennetzes zu bestimmen, wobei ferner vorgesehen ist, dass die Datenbank ausgebildet ist, statische und/oder dynamische Belastungsquellen abzuspeichern, und dass das Belastungsbewertungsmodul ausgebildet ist, eine mentale Belastungssituation eines Benutzers der sprachgesteuerten Bedienschnittstelle in dem vorbestimmten zukünftigen Zeitintervall zu erkennen.

Das Belastungsbewertungsmodul ist ausgebildet, Belastungsquellen mit Datenpunkten des Datenmodells des Straßennetzes zu verknüpfen, und/oder mindestens einer Belastungsquelle mindestens einen Belastungswert zuzuweisen.

Ferner ist das Belastungsbewertungsmodul ausgebildet, einen akkumulierten Belastungswert aus dem mindestens einen Belastungswert zu ermitteln und/oder mindestens einen Belastungswert als akkumulierten Belastungswert zu übernehmen.

Zudem ist das Belastungsbewertungsmodul ausgebildet, die mentale Belastungssituation zu erkennen, wenn der akkumulierte Belastungswert an der zu erwartenden Position und/oder in dem vorbestimmten zukünftigen Zeitintervall einen vorbestimmten Schwellenwert überschreitet.

Das Belastungsbewertungsmodul ist ausgebildet, eine Interaktion zwischen der sprachgesteuerten Bedienschnittstelle und einem Benutzer anzupassen, wenn eine Belastungssituation erkannt wurde, wobei die Anpassung eine zeitliche Verschiebung und/oder eine Aussetzung und/oder ein Abbruch einer Spracheingabe und/oder einer Sprachausgabe und/oder eines Gesamtdialogs zwischen der sprachgesteuerten Bedienschnittstelle und dem Benutzer ist.

Bevorzugt ist das Belastungsbewertungsmodul ausgebildet, Belastungswerte unter Hinzuziehung von Benutzereingaben anzupassen.

Damit wird vorteilhafterweise ein Lernbetrieb beziehungsweise eine Anlern- oder Optimierungsphase ermöglicht.

Ferner kann bevorzugt vorgesehen sein, dass eine Traffic-Message-Channel-Datenquelle vorgesehen ist, wobei die Datenbank ausgebildet ist, Daten über Belastungsquellen von der Traffic-Message-Channel-Datenquelle zu erhalten.

Hierdurch wird vorteilhafterweise erreicht, dass aktuelle Verkehrsinformationen in das Erkennen einer mentalen Belastungssituation einfließen.

Weiter kann bevorzugt ein Cloud-System und/oder ein Server-System vorgesehen sein, wobei die Datenbank ausgebildet ist, Daten über Belastungsquellen von dem Cloud-System und/oder dem Server-System zu erhalten.

Durch Vorsehung eines Cloud- oder eines Server-Systems beziehungsweise einer darin angelegten externen Datenbank wird es möglich, Belastungswerte, insbesondere allgemeine Belastungswerte über mehrere Benutzer zu mitteln.

Weiter kann bevorzugt vorgesehen sein, dass das Belastungsbewertungsmodul ausgebildet ist, zur Bestimmung der zu erwartenden Position Routeninformationen des Navigationsmoduls zu berücksichtigen.

Eine weitere Lösung der Aufgabe besteht in der Bereitstellung eines Kraftfahrzeuges mit einer vorbeschriebenen Vorrichtung.

### Kurze Beschreibung der Figuren

Ein Ausführungsbeispiel der vorliegenden Erfindung wird anhand der Figuren dargestellt. Es zeigen:
Fig. 1 ein Flussdiagramm eines Verfahrens zur Steuerung einer sprachgesteuerten Bedienschnittstelle in einem Kraftfahrzeug, und
Fig. 2 eine schematische Darstellung einer Vorrichtung zur Durchführung des Verfahrens.

### Ausführliche Beschreibung der Figuren

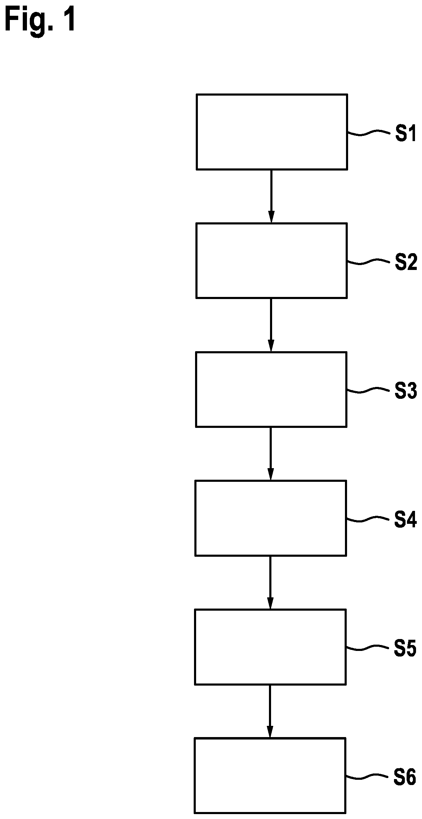

Fig. 1 zeigt ein Flussdiagramm eines Verfahrens zur Steuerung von sprachgesteuerten Bedienschnittstellen in einem Kraftfahrzeug. In einem ersten Schritt S1 des Verfahrens wird eine zu erwartende Position eines Kraftfahrzeuges innerhalb eines vorbestimmten zukünftigen Zeitintervalls T bestimmt. In einem folgenden Schritt S2 werden statische und/oder dynamische Belastungsquellen an der zu erwartenden Position ermittelt. Im Schritt S3 wird mindestens ein Belastungswert an mindestens eine der ermittelten statischen und/oder dynamischen Belastungsquellen zugewiesen. Im darauf folgenden Verfahrensschritt S4 wird ein akkumulierter Belastungswert aus dem mindestens einem Belastungswert ermittelt und/oder mindestens ein Belastungswert wird als ein akkumulierter Belastungswert übernommen. Im auf den Verfahrensschritt S4 folgenden Verfahrensschritt S5 wird eine mentale Belastungssituation eines Benutzers einer sprachgesteuerten Bedienschnittstelle in dem vorbestimmten zukünftigen Zeitintervall erkannt, wenn der akkumulierte Belastungswert an der zu erwartenden Position und/oder in dem vorbestimmten zukünftigen Zeitintervall T einen vorbestimmten Schwellenwert überschreitet. Das Verfahren schreitet dann fort zum Schritt S6, in dem eine Interaktion zwischen einer sprachgesteuerten Bedienschnittstelle und einem Benutzer angepasst wird, wenn eine Belastungssituation erkannt wurde, wobei die Anpassung eine zeitliche Verschiebung und/oder eine Aussetzung und/oder einen Abbruch einer Spracheingabe und/oder einer Sprachausgabe und/oder eines Gesamtdialogs zwischen sprachgesteuerter Bedienschnittstelle und Benutzer ist. Ausgenommen von einer zeitlichen Verschiebung und/oder einer Aussetzung und/oder eines Abbruchs einer Spracheingabe und/oder einer Sprachausgabe und/oder eines Gesamtdialogs können jedoch TMC-Gefahrenmeldungen und Interaktionen des Benutzers im Rahmen einer Gefahrenmeldung sein, wie beispielsweise der Hinweis auf einen auf der selben Fahrspur entgegekommenden Fahrer, ein sogenannter "Geisterfahrer".

Es können somit Ausnahmeregelungen zur zeitlichen Verschiebung und/oder Aussetzung und/oder Abbruch einer Spracheingabe und/oder einer Sprachausgabe und/oder eines Gesamtdialogs vorgegeben oder definiert werden.

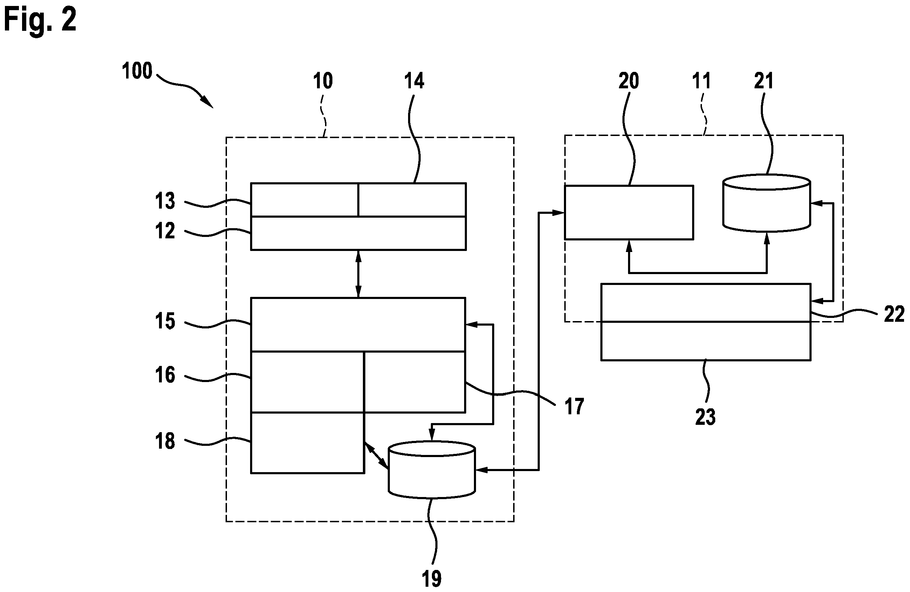

Fig. 2 zeigt eine Vorrichtung 100 geeignet zur Durchführung des in Figur 1 dargestellten Verfahrens. Die Vorrichtung 100 besteht aus einem Client-System 10 und einem Server- beziehungsweise Cloud-System 11. Das Client-System 10 umfasst eine sprachgesteuerte Bedienschnittstelle 12, welche an einen Spracherkenner 13 und eine Sprachausgabe 14 gekoppelt ist. Zusätzlich befindet sich im Client-System 10 ein Belastungsbewertungsmodul 15, ein Navigationsmodul 16, ein Fahrzeugdatenmodul 17, eine Traffic-Message-Channel-Datenquelle 18, eine Datenbank 19, welche mögliche userspezifische Belastungsquellen und deren Belastungswert enthält. Synchronisiert wird diese Datenbank 19 mit dem Cloud-System 11 über eine Usermanagement- und Synchronisationskomponente 20. Das Cloud-System 11 umfasst dafür eine externe Datenbank 21 mit benutzerübergreifenden beziehungsweise allgemeinen Belastungsquellen und Belastungswerten, welche durch interne Services 22, die wiederum auf externe Services 23 zugreifen, auf dem aktuellen Stand gehalten wird. Das Belastungsbewertungsmodul 15 ist dabei dazu ausgebildet, eine Interaktion der sprachgesteuerten Bedienschnittstelle 12 mit einem Benutzer anzupassen. Die Anbindung an das Server- beziehungsweise Cloud-System 11 ist optional und das Verfahren beziehungsweise die Vorrichtung funktioniert auch basierend auf den Informationen, welche in der lokalen Datenbank 19 abgespeichert sind.

Das Fahrzeugdatenmodul 17 und/oder das Navigationsmodul 16 stellen dem Belastungsbewertungsmodul 15 Messdaten über die aktuelle Position und die aktuelle Geschwindigkeit des Kraftfahrzeuges zur Verfügung. Ferner liefert das Navigationsmodul 16 dem Belastungsbewertungsmodul 15 ein Datenmodell eines Straßennetzes in einer Umgebung einer Position eines Kraftfahrzeuges, insbesondere eine Straßenkarte. Innerhalb des Belastungsbewertungsmodules 15 wird ein Modell berechnet, welches die Position des Fahrzeuges innerhalb eines zu parametrisierenden, zukünftigen vorbestimmten Zeitintervalls T charakterisiert beziehungsweise bestimmt. Dieses Modell bezieht zum einen die aktuelle Position und zum anderen die aktuelle Geschwindigkeit des Kraftfahrzeuges mit ein, um alle Möglichkeiten für die Position innerhalb des Zeitfensters beziehungsweise des Zeitintervalls T zu berechnen. Das Modell, insbesondere das Positionsmodell, kann verbessert werden, für den Fall, dass der Benutzer einer vorher eingegebenen Route aus der Navigationskomponente beziehungsweise dem Navigationsmodul 16 folgt. Folgend wird das Positionsmodell mit möglichen mentalen Belastungen für den Benutzer annotiert. Solche Belastungen sind unter anderem:
Kreuzungen auf der Karte, vor allem, wenn anhand der vorher eingegebenen Route links abgebogen werden soll, scharfe Kurven auf der Straßenkarte, geplanter oder möglicher Spurwechsel anhand der vorher eingegebenen Route und der Straßenkarte, Verkehrszeichen mit Gefahrensymbolen oder abrupten Geschwindigkeitsreduktionen, wobei die Verkehrszeichen zum Beispiel über Internetdienste, die Straßenkarte oder Kameras erfasst werden, dichter Verkehr gemeldet über internetbasierte Systeme oder über lokale Kameras mit im Hintergrund arbeitenden bildverarbeitenden Systemen, Stau-, Unfall- oder Verkehrsbehinderungsmeldungen über den Traffic-Message-Channel, und Unfallstatistiken, zum Beispiel von Kurven oder Kreuzungen, Krankenhäuser, Schulen, Kindergärten oder Altenheime, das lokale oder allgemeine Verkehrsaufkommen, der Personenverkehr, der öffentliche Personennahverkehr.

Diesen möglichen Belastungsquellen wird mindestens einer der folgenden Belastungswerte zugewiesen: allgemeiner typspezifischer Belastungswert, persönlicher typspezifischer Belastungswert, allgemeiner konkreter Belastungswert oder persönlicher konkreter Belastungswert.

Die zuzuweisenden Belastungswerte befinden sich beispielsweise in der Datenbank 19. Die Datenbank 19 kann dabei direkt über die Traffic-Message-Channel-Datenquelle 18 mit aktuellen Verkehrsdaten angereichert werden. Zusätzlich wird die Datenbank 19 mit der externen Datenbank 21 des Serverbeziehungsweise Cloud-Systems 11 über die User-Management- und Synchronisationskomponente 20 synchronisiert und erhält somit auch externe, aktuelle und aufwändiger zu berechnende Belastungsquellen über interne Services 22, welche sich externer Services 23 bedienen.

Das Belastungsbewertungsmodul 15 bestimmt einen akkumulierten Belastungswert. Dieser akkumulierte Belastungswert errechnet sich aus den vorgenannten möglichen Belastungswerten zum Beispiel über eine Priorisierung oder mittels einer Linearkombination der Belastungswerte. Dieser Prozess findet in regelmäßigen Abständen statt, um zu gewährleisten, dass die sprachgesteuerte Bedienschnittstelle 12 stets aktuelle Informationen über den Belastungszustand des Benutzers hat.

Das Belastungsbewertungsmodul 15 übermittelt den akkumulierten Belastungswert an die sprachgesteuerte Bedienschnittstelle 12, welche wie folgt reagieren kann, um den Benutzer vor zusätzlicher Belastung durch Sprachinteraktion zu schützen. Es können durch die Sprachausgabe 14 auszugebende und anstehende Sprachausgaben notfalls unterbrochen und zeitlich nach hinten verschoben werden, sobald ein benutzerspezifischer Schwellenwert von dem akkumulierten Belastungswert überschritten wird. Dabei können von einer zeitlichen Verschiebung und/oder einer Aussetzung und/oder eines Abbruchs einer Spracheingabe und/oder einer Sprachausgabe und/oder eines Gesamtdialogs TMC-Gefahrenmeldungen und Interaktionen des Benutzers im Rahmen einer Gefahrenmeldung ausgenommen sein, wie beispielsweise der Hinweis auf einen auf der selben Fahrspur entgegekommenden Fahrer, ein sogenannter "Geisterfahrer".

Es können somit Ausnahmeregelungen zur zeitlichen Verschiebung und/oder Aussetzung und/oder Abbruch einer Spracheingabe und/oder einer Sprachausgabe und/oder eines Gesamtdialogs vorgegeben oder definiert werden.

Alternativ kann die Sprachausgabe beziehungsweise der ganze Dialog, eventuell mit einer sehr kurzen Benachrichtigung oder einem Signal, auch abgebrochen werden, falls die Belastung, insbesondere der Belastungswert zu groß ist.

Zudem kann der Benutzer für anstehende Spracheingaben über den Spracherkenner 13 mehr Zeit bekommen, sodass er frühestens direkt im Anschluss an die Belastungsquelle beziehungsweise die Belastungssituation reagieren muss. Alternativ kann die Spracheingabe beziehungsweise der ganze Dialog, eventuell mit einer sehr kurzen Benachrichtigung oder einem Signal, auch abgebrochen werden, falls die Belastung beziehungsweise der Belastungswert zu groß ist.

Zur Optimierung der Belastungswerte kann der Benutzer zum Beispiel über die sprachgesteuerte Bedienschnittstelle 12 zu jedem Zeitpunkt, gegebenenfalls bis auf einen Zeitpunkt, in welchem die Spracheingabe verschoben wurde, Feedback darüber geben, wie er die aktuelle Belastungssituation erlebt hat. Das Feedback wird vom Belastungsbewertungsmodul 15 entgegengenommen. Je nachdem, ob es sich dabei um ein konkretes positives Feedback oder ein konkretes negatives Feedback handelt, wird der Belastungswert für die entsprechende Belastungsquelle, also für die entsprechende Annotation des Positionsmodells beziehungsweise eines Datenpunktes des Datenmodells des Straßennetzes, gesenkt oder erhöht. Auch kann eine Annotation einer Position, welche der aktuellen Position am nächsten liegt und vom genannten Typ ist, entweder gesenkt oder erhöht werden. Gleiches gilt für typspezifische Belastungswerte, zum Beispiel anhand von gesprochenen Benutzereingaben wie "Kreuzungen sind kein Problem" im Gegensatz zu "Ich hasse Spurwechsel". Grundsätzlich können auch die benutzerspezifischen Schwellenwerte für die Unterbrechung/Verschiebung der Spracheingabe und Sprachausgabe beziehungsweise den Abbruch des Dialogs angepasst werden. Angepasste Belastungswerte werden in der Datenbank 19 abgespeichert. Falls das Client-System 10 der Vorrichtung 100 mit einem Server- beziehungsweise Cloud-System 11 verbunden ist, so gelangen diese angepassten Belastungswerte über die User-Management- und Synchronisationskomponente 20 in die externe Datenbank 21 des Cloud- oder Server-Systems 11. Ein Dienst innerhalb der internen Services 22 kümmert sich darum, dass die allgemeinen konkreten Belastungswerte anhand der persönlichen konkreten Belastungswerte über alle Benutzer des Systems hinweg angepasst werden. Zusätzlich werden die gemittelten Werte über die persönlichen typspezifischen Belastungswerte zu den allgemeinen typspezifischen Belastungswerten aggregiert.

## Patentansprüche

1. Verfahren zur Steuerung von sprachgesteuerten Bedienschnittstellen (12) in Kraftfahrzeugen umfassend die Schritte:
a) Bestimmen einer zu erwartenden Position eines Kraftfahrzeuges innerhalb eines vorbestimmten zukünftigen Zeitintervalls (T),
b) Ermitteln von statischen und/oder dynamischen Belastungsquellen an der zu erwartenden Position,
c) Zuweisen mindestens eines Belastungswertes an mindestens eine der ermittelten statischen und/oder dynamischen Belastungsquellen,
d) Ermitteln eines akkumulierten Belastungswertes aus dem mindestens einen Belastungswert und/oder Übernehmen mindestens eines Belastungswertes als akkumulierten Belastungswert,
e) Erkennen einer mentalen Belastungssituation eines Benutzers einer sprachgesteuerten Bedienschnittstelle (12) in dem vorbestimmten zukünftigen Zeitintervall (T), wobei die mentale Belastungssituation erkannt wird, wenn der akkumulierte Belastungswert an der zu erwartenden Position und/oder in dem vorbestimmten zukünftigen Zeitintervall einen vorbestimmten Schwellenwert überschreitet, und
f) Anpassen einer Interaktion zwischen einer sprachgesteuerten Bedienschnittstelle (12) und einem Benutzer, wenn eine Belastungssituation erkannt wurde, wobei die Anpassung eine zeitliche Verschiebung und/oder eine Aussetzung und/oder ein Abbruch einer Spracheingabe und/oder einer Sprachausgabe und/oder eines Gesamtdialogs zwischen sprachgesteuerter Bedienschnittstelle (12) und Benutzer ist.

2. Verfahren nach Anspruch 1, **dadurch gekennzeichnet, dass** der mindestens eine Belastungswert unter Hinzuziehung von Benutzereingaben angepasst wird.

3. Verfahren nach Anspruch 1 oder 2, **dadurch gekennzeichnet, dass** mindestens einer Belastungsquelle ein allgemeiner typspezifischer Belastungswert und/oder ein persönlicher typspezifischer Belastungswert und/oder ein allgemeiner konkreter Belastungswert und/oder ein persönlicher konkreter Belastungswert zugewiesen wird.

4. Verfahren nach einem der vorgenannten Ansprüche, **dadurch gekennzeichnet, dass** zur Bestimmung der zu erwartenden Position Routeninformationen eines Navigationsmoduls (16) berücksichtigt werden.

5. Verfahren nach einem der vorgenannten Ansprüche, **dadurch gekennzeichnet, dass** Belastungsquellen und/oder Belastungswerte aktualisiert werden, wobei die Aktualisierung durch Hinzuziehung einer externen Datenbank (21), insbesondere einer externen Datenbank (21) eines Cloud-Systems (11) und/oder eines Server-Systems, und/oder eines Traffic Message Channels erfolgt.

6. Vorrichtung (100) geeignet zur Durchführung des Verfahrens nach einem der Ansprüche 1 bis 5, umfassend eine sprachgesteuerte Bedienschnittstelle (12), ein Navigationsmodul (16), eine Datenbank (19), ein Fahrzeugdatenmodul (17), und ein Belastungsbewertungsmodul (15), wobei das Fahrzeugdatenmodul (17) ausgebildet ist, mindestens die Position und/oder die Geschwindigkeit eines Kraftfahrzeugs zu ermitteln, wobei das Navigationsmodul (16) ausgebildet ist, ein Datenmodell eines Straßennetzes in einer Umgebung einer Position eines Kraftfahrzeugs bereitzustellen, wobei das Belastungsbewertungsmodul (15) ausgebildet ist, für ein zukünftiges vorbestimmtes Zeitintervall eine zu erwartende Position eines Kraftfahrzeuges unter Verwendung mindestens der Position und der Geschwindigkeit des Kraftfahrzeuges und des Datenmodells des Straßennetzes zu bestimmen, wobei die Datenbank (19) ausgebildet ist, statische und/oder dynamische Belastungsquellen abzuspeichern, und wobei das Belastungsbewertungsmodul (15) ausgebildet ist, eine mentale Belastungssituation eines Benutzers der sprachgesteuerten Bedienschnittstelle (12) in dem vorbestimmten zukünftigen Zeitintervall zu erkennen, wobei das Belastungsbewertungsmodul (15) ausgebildet ist, Belastungsquellen mit Datenpunkten des Datenmodells des Straßennetzes zu verknüpfen, und/oder wobei das Belastungsbewertungsmodul (15) ausgebildet ist, mindestens einer Belastungsquelle mindestens einen Belastungswert zuzuweisen, wobei das Belastungsbewertungsmodul (15) ausgebildet ist, einen akkumulierten Belastungswert aus dem mindestens einen Belastungswert zu ermitteln und/oder mindestens einen Belastungswert als akkumulierten Belastungswert zu übernehmen, wobei das Belastungsbewertungsmodul (15) ausgebildet ist, die mentale Belastungssituation zu erkennen, wenn der akkumulierte Belastungswert an der zu erwartenden Position und/oder in dem vorbestimmten zukünftigen Zeitintervall einen vorbestimmten Schwellenwert überschreitet, und wobei das Belastungsbewertungsmodul (15) ausgebildet ist, eine Interaktion zwischen der sprachgesteuerten Bedienschnittstelle (12) und einem Benutzer anzupassen, wenn eine Belastungssituation erkannt wurde, wobei die Anpassung eine zeitliche Verschiebung und/oder eine Aussetzung und/oder ein Abbruch einer Spracheingabe und/oder einer Sprachausgabe und/oder eines Gesamtdialogs zwischen der sprachgesteuerten Bedienschnittstelle (12) und Benutzer ist.

7. Vorrichtung (100) nach Anspruch 6, **dadurch gekennzeichnet, dass** das Belastungsbewertungsmodul (15) ausgebildet ist, Belastungswerte unter Hinzuziehung von Benutzereingaben anzupassen.

8. Vorrichtung (100) nach Anspruch 6 oder 7, **dadurch gekennzeichnet, dass** eine Traffic Message Channel-Datenquelle (18) vorgesehen ist, wobei die Datenbank (19) ausgebildet ist, Daten über Belastungsquellen von der Traffic-Message-Channel-Datenquelle (18) zu erhalten.

9. Vorrichtung (100) nach einem der Ansprüche 6 bis 8, **dadurch gekennzeichnet, dass** ein Cloud-System (11) und/oder ein Server-System vorgesehen ist, wobei die Datenbank (19) ausgebildet ist, Daten über Belastungsquellen von dem Cloud-System (11) und/oder dem Server-System zu erhalten.

10. Kraftfahrzeug mit einer Vorrichtung (100) nach einem der Ansprüche 6 bis 9.

## Claims

1. Method for controlling voice-controlled user interfaces (12) in motor vehicles, comprising the steps of:
a) determining a position to be expected for a motor vehicle within a predetermined future time interval (T),
b) ascertaining static and/or dynamic load sources at the position to be expected,
c) assigning at least one load value to at least one of the ascertained static and/or dynamic load sources,
d) ascertaining an accumulated load value from the at least one load value and/or adopting at least one load value as accumulated load value,
e) detecting a mental load situation for a user of a voice-controlled user interface (12) in the predetermined future time interval (T), wherein the mental load situation is detected if the accumulated load value exceeds a predetermined threshold value at the position to be expected and/or in the predetermined future time interval, and
f) adapting an interaction between a voice-controlled user interface (12) and a user if a load situation has been detected, wherein the adaptation is a time shift and/or a suspension and/or a termination of a voice input and/or of a voice output and/or of an overall dialogue between voice-controlled user interface (12) and user.

2. Method according to Claim 1, **characterized in that** the at least one load value is adapted by consulting user inputs.

3. Method according to Claim 1 or 2, **characterized in that** at least one load source is assigned a general type-specific load value and/or a personal type-specific load value and/or a general definite load value and/or a personal definite load value.

4. Method according to one of the preceding claims, **characterized in that** the position to be expected is determined by taking into consideration route information of a navigation module (16).

5. Method according to one of the preceding claims, **characterized in that** load sources and/or load values are updated, wherein the update is effected by consulting an external database (21), in particular an external database (21) of a cloud system (11) and/or of a server system, and/or a traffic message channel.

6. Apparatus (100) suitable for performing the method according to one of Claims 1 to 5, comprising a voice-controlled user interface (12), a navigation module (16), a database (19), a vehicle data module (17) and a load rating module (15), wherein the vehicle data module (17) is designed to ascertain at least the position and/or the velocity of a motor vehicle, wherein the navigation module (16) is designed to provide a data model of a road network in surroundings of a position of a motor vehicle, wherein the load rating module (15) is designed to determine a position to be expected for a motor vehicle for a future predetermined time interval by using at least the position and the velocity of the motor vehicle and the data model of the road network, wherein the database (19) is designed to store static and/or dynamic load sources, and wherein the load rating module (15) is designed to detect a mental load situation for a user of the voice-controlled user interface (12) in the predetermined future time interval, wherein the load rating module (15) is designed to link load sources to data points of the data model of the road network, and/or wherein the load rating module (15) is designed to assign at least one load source at least one load value, wherein the load rating module (15) is designed to ascertain an accumulated load value from the at least one load value and/or to adopt at least one load value as accumulated load value, wherein the load rating module (15) is designed to detect the mental load situation if the accumulated load value exceeds a predetermined threshold value at the position to be expected and/or in the predetermined future time interval, and wherein the load rating module (15) is designed to adapt an interaction between the voice-controlled user interface (12) and a user if a load situation has been detected, wherein the adaptation is a time shift and/or a suspension and/or a termination of a voice input and/or of a voice output and/or of an overall dialogue between the voice-controlled user interface (12) and the user.

7. Apparatus (100) according to Claim 6, **characterized in that** the load rating module (15) is designed to adapt load values by consulting user inputs.

8. Apparatus (100) according to Claim 6 or 7, **characterized in that** there is provision for a traffic message channel data source (18), wherein the database (19) is designed to receive data about load sources from the traffic message channel data source (18).

9. Apparatus (100) according to one of Claims 6 to 8, **characterized in that** there is provision for a cloud system (11) and/or a server system, wherein the database (19) is designed to receive data about load sources from the cloud system (11) and/or the server system.

10. Motor vehicle having an apparatus (100) according to one of Claims 6 to 9.

## Revendications

1. Procédé de commande d'interfaces d'opération (12) dans des véhicules automobiles, comprenant les étapes suivantes :
a) détermination d'une position à attendre d'un véhicule automobile à l'intérieur d'un futur intervalle de temps (T) prédéterminé,
b) identification de sources de sollicitation statiques et/ou dynamiques à la position à attendre,
c) affectation d'au moins une valeur de sollicitation à au moins l'une des sources de sollicitation statiques et/ou dynamiques identifiées,
d) identification d'une valeur de sollicitation cumulée à partir de l'au moins une valeur de sollicitation et/ou prise en compte d'au moins une valeur de sollicitation en tant que valeur de sollicitation cumulée,
e) reconnaissance d'une situation de sollicitation mentale d'un utilisateur d'une interface d'opération (12) à commande vocale dans le futur intervalle de temps (T) prédéterminé, la situation de sollicitation mentale étant reconnue lorsque la valeur de sollicitation cumulée à la position à attendre et/ou dans le futur intervalle de temps prédéterminé dépasse une valeur de seuil prédéterminée, et
f) adaptation d'une interaction entre une interface d'opération (12) à commande vocale et un utilisateur lorsqu'une situation de sollicitation a été reconnue, l'adaptation étant un décalage dans le temps et/ou une suspension et/ou une interruption d'une saisie vocale et/ou d'une sortie vocale et/ou d'un dialogue complet entre l'interface d'opération (12) à commande vocale et l'utilisateur.

2. Procédé selon la revendication 1, **caractérisé en ce que** l'au moins une valeur de sollicitation est adaptée en faisant appel à des saisies d'utilisateur.

3. Procédé selon la revendication 1 ou 2, **caractérisé en ce qu'**une valeur de sollicitation générale spécifique à un type et/ou une valeur de sollicitation personnelle spécifique à un type et/ou une valeur de sollicitation concrète générale et/ou une valeur de sollicitation concrète personnelle est attribuée à au moins une source de sollicitation.

4. Procédé selon l'une des revendications précédentes, **caractérisé en ce que** les informations d'itinéraire d'un module de navigation (16) sont prises en compte pour la détermination de la position à attendre.

5. Procédé selon l'une des revendications précédentes, **caractérisé en ce que** les sources de sollicitation et/ou les valeurs de sollicitation sont actualisées, l'actualisation étant effectuée en faisant appel à une base de données externe (21), notamment une base de données externe (21) d'un système infonuagique (11) et/ou d'un système serveur et/ou d'un canal de message de trafic.

6. Dispositif (100) conçu pour mettre en œuvre le procédé selon l'une des revendications 1 à 5, comprenant une interface d'opération (12) à commande vocale, un module de navigation (16), une base de données (19), un module de données de véhicule (17) et un module d'évaluation de sollicitation (15), le module de données de véhicule (17) étant configuré pour identifier au moins la position et/ou la vitesse d'un véhicule automobile, le module de navigation (16) étant configuré pour mettre à disposition un modèle de données d'un réseau routier dans un environnement d'une position d'un véhicule automobile, le module d'évaluation de sollicitation (15) étant configuré pour déterminer, pour un futur intervalle de temps prédéterminé, une position à attendre d'un véhicule automobile en utilisant au moins la position et la vitesse du véhicule automobile et le modèle de données du réseau routier, la base de données (19) étant configurée pour enregistrer des sources de sollicitation statiques et/ou dynamiques, et le module d'évaluation de sollicitation (15) étant configuré pour reconnaître une situation de sollicitation mentale d'un utilisateur de l'interface d'opération (12) à commande vocale dans le futur intervalle de temps prédéterminé, le module d'évaluation de sollicitation (15) étant configuré pour lier les sources de sollicitation avec des points de données du modèle de données du réseau routier, et/ou le module d'évaluation de sollicitation (15) étant configuré pour affecter au moins une valeur de sollicitation à au moins une source de sollicitation, le module d'évaluation de sollicitation (15) étant configuré pour identifier une valeur de sollicitation cumulée à partir de l'au moins une valeur de sollicitation et/ou pour prendre en compte au moins une valeur de sollicitation en tant que valeur de sollicitation cumulée, le module d'évaluation de sollicitation (15) étant configuré pour reconnaître la situation de sollicitation mentale lorsque la valeur de sollicitation cumulée à la position à attendre et/ou dans le futur intervalle de temps prédéterminé dépasse une valeur de seuil prédéterminée, et le module d'évaluation de sollicitation (15) étant configuré pour adapter une interaction entre l'interface d'opération (12) à commande vocale et un utilisateur lorsqu'une situation de sollicitation a été reconnue, l'adaptation étant un décalage dans le temps et/ou une suspension et/ou une interruption d'une saisie vocale et/ou d'une sortie vocale et/ou d'un dialogue complet entre l'interface d'opération (12) à commande vocale et l'utilisateur.

7. Dispositif (100) selon la revendication 6, **caractérisé en ce que** le module d'évaluation de sollicitation (15) est configuré pour adapter les valeurs de sollicitation en faisant appel à des saisies d'utilisateur.

8. Dispositif (100) selon la revendication 6 ou 7, **caractérisé en ce qu'**une source de données à canal de message de trafic (18) est présente, la base de données (19) étant configurée pour obtenir des données à propos des sources de sollicitation par le biais de la source de données à canal de message de trafic (18).

9. Dispositif (100) selon l'une des revendications 6 à 8, **caractérisé en ce qu'**un système infonuagique (11) et/ou un système serveur est présent, la base de données (19) étant configurée pour obtenir des données à propos des sources de sollicitation auprès du système infonuagique (11) et/ou du système serveur.

10. Véhicule automobile comprenant un dispositif (100) selon l'une des revendications 6 à 9.
